(19) Europäisches Patentamt
European Patent Office
Office européen des brevets

(11) Publication number: **0 151 741**
**A2**

(12) # EUROPEAN PATENT APPLICATION

(21) Application number: 84115106.1

(22) Date of filing: 10.12.84

(51) Int. Cl.⁴: B 29 C 49/00
C 08 L 23/10, C 08 K 5/15
//(C08L23/10, C08K5:15)

(30) Priority: 13.12.83 JP 233501/83
13.12.83 JP 233502/83
13.12.83 JP 233503/83
13.12.83 JP 233504/83
13.12.83 JP 233505/83
13.12.83 JP 233506/83
13.12.83 JP 233507/83
13.12.83 JP 233508/83
13.12.83 JP 233509/83
13.12.83 JP 233510/83
18.01.84 JP 5521/84

(43) Date of publication of application:
21.08.85 Bulletin 85/34

(84) Designated Contracting States:
BE CH DE FR GB IT LI NL

(71) Applicant: MITSUI TOATSU CHEMICALS, INCORPORATED
2-5 Kasumigaseki 3-chome
Chiyoda-Ku Tokyo 100(JP)

(72) Inventor: Ueki, Toru
16-1, Kitashin, Seya-ku Yokohama
Kanagawa-ken(JP)

(72) Inventor: Amemiya, Hideo
2882, Iijimacho, Totsuka-ku Yokohama
Kanagawa-ken(JP)

(72) Inventor: Hata, Toyoaki
4-3-21, Katase, Fujisawa
Kanagawa-ken(JP)

(72) Inventor: Miyazaki, Takashi
7-14-8, Minamikoiwa Edogawa-ku
Tokyo(JP)

(74) Representative: Schüler, Horst, Dr. European Patent Attorney
Kaiserstrasse 41
D-6000 Frankfurt/Main 1(DE)

(54) **Injection stretch-blow molded container and resin composition therefor.**

(57) Disclosed herein are containers, each of which is equipped with a side wall having a percentage haze of 9% or smaller when converted to the wall thickness of 1 mm and has been obtained by injection stretch-blow molding a resin composition of a polypropyrene-base resin, preferably of a random copolymer of propylene and an alpha-olefin. Resin compositions and improved injection stretch-blow molding processes, which are both suited for the production of such containers, are also disclosed. Also disclosed are therapeutic containers obtained by subjecting a random copolymer of propylene and ethylene, which copolymer has a specific melt flow index, to injection stretch-blow molding.

EP 0 151 741 A2

Croydon Printing Company Ltd.

M/2617

# SPECIFICATION

## Title of the Invention:

Injection Stretch-Blow Molded Container and Resin Composition Therefor

## Background of the Invention:

### a) Field of the Invention:

This invention relates to containers obtained by injection stretch-blow molding polypropylene-base resins and having extremely good transparency. It also relates to resin compositions suitable for injection stretch-blow molding and composed individually of a random copolymer of propylene and an alpha-olefin and improved injection stretch-blow molding processes.

### b) Description of the Prior Art:

Polypropylene-base resins have found wide-spread commercial utility in foods bottles and containers, detergent bottles and containers, bottles and containers for therapeutic applications (hereinafter generally called "foods containers, detergent containers, therapeutic containers, etc." for the sake of brevity), etc. because of their superb heat resistance, chemical resistance and safety to the

health as well as the excellent stiffness and impact strength of their blow-molded products.

Blow-molded polypropylene containers having such excellent properties are however poor in transparency and even in the case of some containers having better transparency, these containers are somewhat hazed in white.

As methods for making improvements to the transparency of polypropylene-base resins, it has conventionally been known to incorporate a nucleating agent, to subject to heat degradation in either presence or absence of an organic peroxide, or to copolymerize ethylene with propylene. As processing methods for the same purpose, it has also been known to subject such resins to biaxial orientation, etc. When usual blow-molding techniques are relied upon, it is still impossible to obtain blow-molded products having sufficient transparency even if these prior art countermeasures are applied.

Propylene-base resins which have been employed for conventional blow-molding techniques generally have melt flow indexes (MFIs) below 4 g/10 min., and typically of 1 - 2 g/10 min. when measured under Condition 14 of Japanese Industrial Standard K-7210 (equivalent to the Condition L defined in ASTM D

1238-70) in view of their moldability, impact strength, stiffness and the like.

On the other hand, there have been developed recently some molding machines which may be able to practice the injection stretch-blow molding process on polypropylene-base resins (Modern Plastics International, June 1984, pp 34-36). Using these molding machines, blow-molded products have also been produced on trial basis. However, as far as the present inventors are aware of, no one seems to have succeeded to provide blow-molded products with sufficient transparency and even wall thickness from polypropylene-base resins.

Regarding therapeutic containers, the Pharmacopoeia Japonica contains a standard for plastic transfusion bottles. Amongst various requirements, it is particularly required with respect to the transparency that it must be so high as to permit visual observation of any foreign material in the liquid in each container. Although polypropylene-base resins are considered to be resins excellent in mechanical properties, heat resistance upon sterilization, and safety to the health and are thus used as containers for transfusion, they are still insufficient in transparency. Certain improvements have been made to their transparency by virtue of extrusion biaxial-stretch blow molding techniques.

The thus-improved transparency are, however, still insufficient.

As has been mentioned above, it is the present siutation that no one has successfully provided blow-molded products with sufficient transparency from polypropylene-base resins. There is thus a strong standing demand for the development of blow-molded containers of polypropylene resins which have transparency equivalent to those of containers made of polyvinyl chloride resins and are thus suitable as therapeutic containers.

Summary of the Invention

An object of this invention is to provide a container which is made of a polypropylene-base resin, is excellent in transparency and is substantially free of uneven wall thickness.

Another object of this invention is to provide a polypropylene-base resin composition suitable for the production of a container with excellent transparency and substantially without uneven wall thickness in accordance with the injection stretch-blow molding process.

A further object of this invention is to provide an improved production process for the above-described container.

A still further object of this invention is to provide a therapeutic container, particularly, a transfusion container having excellent transparency.

The container of this invention can be obtained by subjecting a polypropylene-base resin to injection stretch-blow molding. It includes a side wall having a percentage haze of 9% or smaller when converted to the wall thickness of 1 mm.

On the other hand, the resin composition of this invention which is suited for use in the injection stretch-blow molding process is formed of a random copolymer of propylene and an alpha-olefin, which random copolymer has a melt flow index of 4 - 50 g/10 min.

The production process of this invention, which process is useful for the production of the above-described container, comprises preblowing an injection-molded parison with a bottom in a preblowing and stretch temperature adjusting mold, which has been adjusted to a temperature in the range of from (Tc - 30°C) to (Tc + 20°C), Tc being the crystallization temperature (°C) of the polypropylene-base resin, so as to adjust the stretch temperature of the injection-molded parison; and then stretch-blow molding the resulting preform.

Furthermore, the therapeutic container of this invention has been obtained by the injection stretch-blow molding of a propylene-ethylene random copolymer having a melt flow index of 4-20 g/10 min.

Detailed Description of the Invention:

As the polypropylene-base resin useful in the production of the container of this invention, it is desirable to employ a random copolymer of propylene and an alpha-olefin, for example, ethylene, 1-butene, 1-pentene or 1-hexene with a random copolymer of propylene and ethylene being particularly preferred. This copolymer may optionally contain a nucleating agent in an amount of 1 wt.% or less. The content of the alpha-olefin in the copolymer may preferably range from 1 to 6 wt.%.

Incidentally, the term "injection stretch-blow molding process" as used herein means a molding process in which a parison with a bottom is formed by injection molding, followed by preblowing of the parison; and after adjusting the stretch temperature of the resulting preform, the preform is then subjected to stretch blowing. As the stretching method, mechanical and axial orientation by means of a pin and lateral orientation owing to blown air are applied in combination.

As illustrative molding machines suitable for use in the practice of the above molding process, may be mentioned injection stretch-blow molding machines, Models ASB-50, ASB-150, ASB-250, ASB-650, etc., all manufactured by Nissei ASB Machine Co., Ltd., Tokyo, Japan.

Taking the injection stretch-blow molding machine Model ASB-50 by way of example, the following conditions may be mentioned as general conditions for conducting injection stretch-blow molding in accordance with this invention.

| | |
|---|---|
| Injection molding temperature: | 200 - 260°C |
| Stretch ratio in preblowing: | 1.0 - 1.8 times (axial) |
| | 1.2 - 2.0 times (lateral) |
| Preblowing air pressure: | 3 - 7 $kg/cm^2$ |
| Temperature of stretch temperature adjusting mold: | 90 - 140°C |
| Stretch ratio in stretch-blow: | 1.2 - 3.5 times (axial) |
| | 1.2 - 6.0 times (lateral) |
| Stretch-blowing air pressure: | 4 - 20 $kg/cm^2$ |

The thus-obtained containers are excellent in transparency and also superb in heat resistance, impact strength, etc. Making use of these properties, they may be suitably used as foods containers, detergent

containers, shampoo bottles, toiletry containers, therapeutic containers and so on.

The term "percentage haze" as used herein means a value measured in accordance with the method described in Japanese Industrial Standard K-6714 (equivalent to ASTM D 1003-61). By the term "side wall having a percentage haze of ... when converted to the wall thickness to 1 mm" is meant a value obtained by cutting out a specimen, measuring its percentage haze B first of all, coating liquid paraffin on both sides of the specimen and measuring the percentage haze (internal percentage haze) A in a state substantially free of influence from reflection and irregular reflection on the surfaces thereof, and then making a calculation on the above-obtained percentage haze B and percentage haze A and the thickness t (mm) of the specimen in accordance with the following equation to obtain a value converted per millimeter of the wall thickness:

$$H = \frac{A}{t} + (B - A)$$

where (B - A) represents the degree of influence to the percentage surface haze. If a container has a percentage haze H greater than 9% when measured and converted to the wall thickness of 1 mm in the above

manner, its transparency is so insufficient that its cloudiness can be readily observed by eyes.

The resin composition of this invention, which is suited for injection stretch-blow molding, is formed of a propylene-alpha-olefin random copolymer having a melt flow index (hereinafter abbreviated as "MFI") of 4 - 50 g/10 min. when measured in accordance with Condition 14 of Japanese Industrial Standard K-7210 (equivalent to ASTM D 1238-70, Condition L). As the alpha-olefin which is one of the components of the copolymer, may be used ethylene, 1-butene, 1-pentene, 1-hexene or the like. Among these resin compositions, a resin composition formed of a propylene-ethylene random copolymer and having the above-specified MFI is particularly preferred because it can provide injection stretch-blow molded products having good transparency.

If the MFI of the propylene-alpha-olefin random copolymer should be lower than 4 g/10 min., it will be impossible to provide sufficient transparency with containers to be injection stretch-blow molded from such a resin composition. On the other hand, any MFIs in excess of 50 g/10 min. will considerably impair the wall thickness uniformity, thereby failing to provide good containers stably.

The amount of the alpha-olefin in the above-described copolymer may preferably range from 1 wt.% to 6 wt.%. If the alpha-olefin content in the copolymer should be lower than 1 wt.%, the resultant containers will become extremely uneven in wall thickness and at the same time, the moldability will be reduced. If the alpha-olefin content should exceed 6 wt.%, the stiffness of resulting injection stretch-blow molded containers will be so poor that they will not be used for actual applications.

The resin composition of this invention may optionally contain additives such as antioxidant, ultraviolet absorbent, antistatic agent, lubricant, colorant and the like as well as other resins and elastomers if desired.

In order to obtain still better transparency, the resin composition may additionally contain a nucleating agent, which is commonly employed in the art, e.g., benzoic acid or sodium benzoate in an amount of 1 wt.% or less. As a particularly preferred nucleating agent, dibenzylidenesorbitol or a derivative thereof may however be used. Its amount may be 0.01 - 1.0 wt.% or typically 0.1 - 0.5 wt.%, both based on the resin composition. Any amounts smaller than 0.01 wt.% will be too little to provide sufficient transparency with containers to be obtained by injection stretch-blow molding. Moreover, where the resin composition has a large MFI, such small amounts wall induce non-uniform wall thicknesses and will hence fail to provide good injection stretch-blow molded containers. If the amount of such a nucleating agent should exceed 1.0 wt.%, the resulting injection stretch-blow molded containers will conversely have stronger white tint and their surfaces will be bled in white, whereby resulting in reduced transparency on the contrary.

As derivatives of dibenzylidenesorbitol, there are compounds represented by the following formula (I):

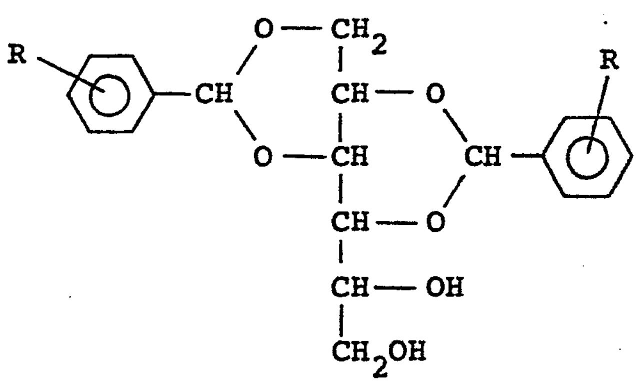

(I)

wherein R means an alkyl or alkoxy group having 1 - 5 carbon atoms. Illustrative of such compounds may include di(methylbenzylidene)sorbitol, di(ethylbenzylidene)sorbitol, di(propylbenzylidene)sorbitol, di(methoxybenzylidene)sorbitol and di(ethoxy-

benzylidene)sorbitol.

It is desirable that the above-described propylene-alpha-olefin random copolymer has an MFI of 4 - 50 g/10 min. and the relation between the MFI (g/10 min.) and its intrinsic viscosity [$\eta$] (dl/g) measured in a tetralin solution of 135°C satisfies the following equation:

$$1.70 \leq \log MFI + 5.20 \log [\eta] \leq 1.95$$

If the value, log MFI + 5.20 log [$\eta$], should be smaller than 1.70, the resin composition is too sticky to provide containers stably in accordance with the injection stretch-blow molding process. Any values greater than 1.95 will be unable to provide containers having sufficient transparency in accordance with the injection stretch-blow molding process.

A resin composition satisfying the equation, $1.70 \leq \log MFI + 5.20 \log [\eta] \leq 1.95$ can be obtained by causing the above copolymer to melt either with a small amount of an organic peroxide added thereto or without such an organic peroxide and then pelletizing the resultant melt.

As organic peroxides usable for the above purpose, may be mentioned dicumyl peroxide, di-t-butyl peroxide, 2,5-dimethyl-2,5-dis(t-butylper-

oxy)hexane. Of these peroxides, those having 10 hours half-life in the temperature range of from 110°C to 130°C are preferred.

In addition, it is particularly desirable for such a propylene-alpha-olefin random copolymer to have an MFI of 4 - 50 g/10 min. and an intrinsic viscosity [$\eta$] (dl/g) measured in a tetralin solution of 135°C, said MFI (g/10 min.) and intrinsic viscosity satisfying the following equation:

$$1.70 \leq \log MFI + 5.20 \log [\eta] \leq 1.95,$$

and to contain dibenzylidenesorbitol or one or more of the above-described derivatives thereof in an amount of 0.01 - 1.0 wt.%.

In the present invention, the resin composition composed of a polypropylene-base resin, preferably a propylene-alpha-olefin random copolymer, especially a propylene-ethylene random copolymer is injection stretch-blow molded, preferably, into containers having side walls of 0.2 - 1.0 mm in thickness.

Containers obtained by subjecting a propylene-ethylene random copolymer having an MFI of 4 - 20 g/10 min. to injection stretch-blow molding have excellent transparency and in addition, good heat resistance, they permit sterilization at high temperatures. Hence, they may be suitably employed as therapeutic containers, especially as bottles for

transfusion. If the MFI of the random copolymer should be smaller than 4 g/10 min., containers to be obtained will have insufficient transparency. Any MFI values greater than 20 g/10 min. will result in containers having extremely uneven wall thicknesses.

As a propylene-ethylene random copolymer for therapeutic containers, it is desirable to contain ethylene in a low proportion. Especially, random copolymers having ethylene contents in the range of 0.5 - 8 wt.% or preferably 1 - 6 wt.% can be suitably used in view of their transparency and heat resistance.

An additional incorporation of a nucleating agent certainly improves the transparency. However, the transparency of the therapeutic containers according to the invention is so good that it is unnecessary to use such nucleating agent since the transparency level of the containers is beyond that required for therapeutic containers.

In the injection stretch-blow molding process of this invention, it is preferred to control the temperature of the preblowing and stretch temperature adjusting mold within the temperature range of from a temperature 30°C lower than the crystallization temperature Tc (°C) of the starting polypropylene-base resin composition, to another temperature 20°C higher than the crystallization temperature, namely,

(Tc - 30°C) - (Tc + 20°C). In this way, it is possible to obtain injection stretch-blow molded containers having excellent transparency and little thickness non-uniformity. A particularly-preferred temperature range is (Tc - 20°C) - (Tc + 10°C). If the temperature of the preblowing and stretch temperature adjusting mold should be lower than (Tc - 30°C), the resultant molded products will become considerably uneven in wall thickness. In some instances, parisons will be broken by the pressures of the air blown thereinto when stretch-blowing same, thereby failing to obtain good molded containers. Any mold temperatures higher than (Tc + 20°C) will be hazed in white to such a degree that the white tint will be visually appreciable. Moreover, the breaking strength will be reduced.

The temperature of the preblowing and stretch temperature adjusting mold may be controlled by any method known per se in the art, for example, by means of an electric heater or by circulating a temperature-controlled oil. It is only necessary that the temperature of the above-mentioned mold reaches any temperature within the above temperature range upon completion of the preblowing step or at a time point immediately before taking the thus-preblown parison, namely, the resultant preform out of the mold subsequent to the completion of the preblowing step.

Depending on the shape or the like of each blow-molded product, it may be possible, with a view toward further improving the wall thickness distribution of the blow-molded product without encoutering any problem or trouble, to effect the temperature control of the preblowing and stretch temperature adjusting mold by dividing it into several sections and controlling the temperatures to different temperatures within the range of from (Tc - 30°C) to (Tc + 20°C).

In order to make the temperature distribution of each parison uniform, it is desirable to bring its corresponding parison into close contact with the preblowing and stretch temperature adjusting mold when the parison is preblown.

According to the present invention, containers obtained by subjecting the polypropylene-base resin to injection stretch-blow molding are excellent in transparency and also superb in heat resistance, impact strength and surface gloss. They are thus suitable for use in various application fields where such properties are required.

A resin composition having the specific MFI and/or the particular relation between the MFI and intrinsic viscosity and composed of the propylene-alfa-olefin random copolymer which may be added with the specific nucleating agent, if desired, is particularly

suited for injection stretch-blow molding because of the excellent transparency of containers to be obtained therefrom in accordance with the injection stretch-blow molding process.

It is also possible to provide containers made of a polypropylene-base resin and having still better transparency by applying the improved injection stretch-blow molding process of this invention, especially, to the above-described resin composition.

In addition, the therapeutic containers of the invention which have been obtained by injection stretch-blow molding a propylene-ethylene random copolymer or a resin composition composed thereof having the specific MFI are excellent in both transparency and heat resistance.

The present invention will hereinafter be described in more detail by the following Examples and Comparative Examples. However, it is noted that these Examples are presented merely to illustrate the present invention and therefore, they should not be construed as limiting the present invention.

Example 1:

Using the injection stretch-blow molding machine ASB-50, a propylene-ethylene random copolymer having a ethylene content of 4 wt.% and an MFI of 15 g/10 min.

and containing 0.3 wt.% of sodium benzoate as a nucleating agent was molded as a polypropylene-base resin under the following conditions to obtain a cylindrical bottle having a diameter of 70 mm and an internal volume of 500 ml.

| | |
|---|---|
| Injection molding temperature: | 220°C |
| Temperature of injection mold: | 15°C |
| Stretch ratio in preblowing: | 1 times (axial)<br>1.4 times (lateral) |
| Preblowing air pressure: | 5 $kg/cm^2$ |
| Temperature of stretch: temperature adjusting mold: | 100°C |
| Stretch ratio in stretch-blow: | 1.8 times (axial)<br>1.2 times (lateral) |
| Stretch blowing air pressure: | 9 $kg/cm^2$ |

The resultant bottle had a weight of 24 g and was an injection stretch-blow molded container made of the polypropylene-base resin and having extremely good transparency. Its side wall had a wall thickness of 0.58 mm and a percentage haze B of 3.1%. Therefore, the side wall had a percentage haze H of 5.3 when converted to the wall thickness of 1 mm. Results of measurement on the properties of the bottle are shown in Table 1.

Both percentage haze were measured in accordance with the method described in Japanese Industrial Standard K-6714 (equivalent to ASTM D 1003-

61), using a hazemeter manufactured by Nihon Denshoku Kabushiki Kaisha.

Examples 2 & 3:

Cylindrical bottles were molded in the same manner as in Example 1, using as polypropylene-base resins random propylene-ethylene copolymers which respectively had ethylene contents, MFIs and nucleating agent (sodium benzoate) contents given in Table 1. The resultant bottles were excellent in transparency. Measurement results on the properties of the bottles are also shown in Table 1.

Table 1

| | Ex. 1 | Ex. 2 | Ex. 3 |
|---|---|---|---|
| Polypropylene-base resin | | | |
| Ethylene content (wt.%) | 4.0 | 5.5 | 4.0 |
| MFI (g/10 min.) | 15 | 40 | 5 |
| Nucleating agent content (wt.%) | 0.3 | 0.5 | 0.2 |
| Bottle properties | | | |
| Wall thickness of side wall | 0.58 | 0.50 | 0.50 |
| Thickness uniformity | good | good | good |
| Percentage haze B (%) | 3.1 | 2.4 | 4.4 |
| Percentage haze H converted to the thickness of 1 mm (%) | 5.3 | 3.8 | 8.2 |

Examples 4 & 5:

Cylindrical bottles were molded in the same manner as in Example 1, using as polypropylene-base resins random copolymers containing 1-butene and 1-hexene respectively in amounts given in Table 2 and also having MFIs and necleating agent (sodium benzoate) contents shown in Table 2. The thus-obtained bottles had excellent transparency. Measurement results of the properties of the bottles are shown in Table 2.

Table 2

| | Ex. 4 | Ex. 5 |
|---|---|---|
| Polypropylene-base resin | | |
| 1-Butene content (wt.%) | 4.2 | - |
| 1-Hexene content (w.t%) | - | 3.6 |
| MFI (g/10 min.) | 18 | 20 |
| Nucleating agent content (wt.%) | 0.3 | 0.3 |
| Bottle properties | | |
| Wall thickness of side wall | 0.55 | 0.57 |
| Thickness uniformity | good | good |
| Percentage haze B (%) | 3.5 | 2.7 |
| Percentage haze H converted to the thickness of 1 mm (%) | 5.8 | 4.8 |

Comparative Example 1:

A bottle similar to that obtained in Example 1 was molded in accordance with the extrusion stretch-blow molding process, using as a polypropylene-base resin a propylene-ethylene random copolymer having an ethylene content of 4 wt.% and an MFI of 2 g/10 min. and containing 0.3 wt.% of sodium benzoate as a nucleating agent. The side wall of the thus-obtained bottle had a wall thickness of 0.58 mm, a percentage haze B of 6.0% and a percentage haze H (converted to the wall thickness of 1 mm) of 9.8%. Thus, the bottle was hazed and its transparency was insufficient.

The term "the extrusion stretch-blow molding process" as used herein means a molding process in which an extrusion-molded pipe is cut in a predetermined length to obtain a parison and after reheating the parison to a stretch temperature, the thus-reheated parison is stretch-blown to obtain a final product. The stretch temperature, stretch-blowing air pressure and stretch ratio in the blow orientation were set respectively at 155°C, 10 $kg/cm^2$, and 3.0 times (axial) and 3.0 times (lateral).

Comparative Example 2:

The procedures of Comparative Example 1 were repeated except that there was used as a polypropylene-base resin a propylene-ethylene random copolymer having an ethylene content of 4 wt.% and an MFI of 15

g/10 min. and containing 0.3 wt.% of sodium benzoate as a nucleating agent. The wall thickness of the thus-obtained pipe was considerably non-uniform. A bottle obtained by stretch-blowing the pipe had a uneven thickness and lacked commercial value.

As apparent from the above Examples and Comparative Examples, the containers produced from the polypropylene-base resins in accordance with injection stretch-blow molding were excellent in transparency. On the other hand, the containers produced in accordance with extrusion stretch-blow molding were hazed and their transparency were thus insufficient.

Examples 6 - 8 & Comparative Examples 3 - 6:

Cylindrical bottles were produced by repeating the procedures of Example 1 except for the use as polypropylene-base resins of propylene-ethylene random copolymers which respectively had ethylene contents and MFIs given in Table 3 and contained 0.3 wt.% of sodium benzoate as a nucleating agent.

Properties of the thus-obtained bottles are tabulated in Table 3.

**Table 3**

| | Polypropylene-base resin | | Bottle properties | | |
|---|---|---|---|---|---|
| | Ethylene content (wt.%) | MFI g/10 min. | Side wall thickness (mm) | Percentage side wall haze (%) | Thickness uniformity |
| Example 6 | 1.5 | 30 | 0.49 | 3.6 | good |
| Example 7 | 4.0 | 5 | 0.50 | 4.1 | good |
| Example 8 | 5.5 | 40 | 0.50 | 2.4 | good |
| Comparative Example 3 | 4.0 | 2 | 0.50 | 18 | good |
| Comparative Example 4 | 0 | 15 | (poor moldability) | | very poor |
| Comparative Example 5 | 0.5 | 15 | (poor moldability) | | very poor |
| Comparative Example 6 | 2.0 | 60 | (poor moldability) | | very poor |

Examples 9 - 14 & Comparative Examples 7 - 9:

Cylindrical bottles were prepared by repeating the procedures of Example 1 except that propylene-ethylene random copolymers having their respective ethylene contents and MFIs shown in Table 4 and containing dibenzylidenesorbitol or diethylbenzylidenesorbitol "NC-4" (trade mark; product of Mitsui-Toatsu Chemicals, Inc.) as a nucleating agent in their respective amounts given in Table 4 were used as polypropylene-base resins.

Properties of the thus-obtained bottles are also shown in Table 4.

## Table 4

| | Polypropylene-base resin | | | Property of bottle | | | |
|---|---|---|---|---|---|---|---|
| | Ethylene content (wt.%) | MFI (g/10 min.) | Nucleating agent(wt.%) | Side wall thickness (mm) | Haze B (%) | Haze H converted to 1 mm wall thickness (%) | Thickness uniformity |
| Example 9 | 4.0 | 15 | 0.3 | 0.53 | 3.1 | 5.3 | good |
| Example 10 | 4.0 | 15 | 0.1 | 0.53 | 4.1 | 6.8 | good |
| Example 11 | 4.0 | 15 | 0.8 | 0.48 | 2.3 | 3.5 | good |
| Example 12 | 4.0 | 15 | 0.3* | 0.52 | 4.8 | 8.6 | good |
| Example 13 | 1.5 | 30 | 0.1 | 0.49 | 3.6 | 6.0 | good |
| Example 14 | 4.0 | 5 | 0.3 | 0.50 | 4.7 | 8.0 | good |
| Comparative Example 7 | 4.0 | 15 | 1.2 | 0.53 | 6.8 | 11.8 | good |
| Comparative Example 8 | 4.0 | 2 | 0.3 | 0.50 | 10.2 | 18.5 | good |
| Comparative Example 9 | 0.5 | 15 | 0.3 | Poor moldability | | - | very poor |

* Dibenzylidenesorbitol was used.

Example 15:

To powder of a propylene-ethylene random copolymer having an ethylene content of 4 wt.% as a polypropylene-base resin, were added 0.30 wt.% of the nucleating agent "NC-4" (trade mark; product of Mitsui-Toatsu Chemicals, Inc.), 0.1 wt.% of an additive such as antioxidant and 0.01 wt.% of an organic peroxide, Lupasol 101 (trade mark; product of Lucidol Yoshitomi Industries, Ltd.). After mixing the resultant mixture thoroughly in a Henschel mixer, the resin composition was extruded at 240°C through an extruder having a barrel diameter of 65 mm into pellets.

The MFI, [$\eta$] and log MFI + 5.20 log [$\eta$] of the thus-obtained pellets are given in Table 5. Those pellets were injection stretch-blow molded in the same manner as in Example 1 to obtain a cylindrical bottle having a diameter of 70 mm and internal content of 500 ml.

Properties of the thus-obtained bottle are shown in Table 5.

Example 16:

The procedures of Example 15 were repeated except that the amount of the nucleating agent "NC-4" was changed to 0.10 wt.%.

Properties of the thus-obtained bottle are also shown in Table 5.

Example 17:

The procedures of Example 15 were repeated except that the amount of the organic peroxide, Lupasol 101, was changed to 0.02 wt.%.

Properties of the thus-obtained bottle are given in Table 5.

Example 18:

The procedures of Example 15 were repeated except that the ethylene content of the random copolymer was altered to 5.5 wt.% and the amounts of the organic peroxide, Lupasol 101, and the nucleating agent were changed to 0.003 wt.% and 0.20 wt.%, respectively.

Properties of the thus-obtained bottle are shown in Table 5.

Example 19:

The procedures of Example 18 were repeated except that the amount of the organic peroxide, Lupasol 101, was altered to 0.20 wt.%.

Properties of the thus-obtained bottle are shown in Table 5.

Example 20:

The procedures of Example 15 were repeated except that the ethylene content of the random

copolymer was changed to 1.5 wt.%, the organic peroxide was changed to "Parkadox 14" (trade mark; product of Kayaku-Knooley Kabushiki Kaisha) and its amount was altered to 0.15 wt.%, and the nucleating agent was also changed to dibenzylidenesolbitol.

Properties of the resultant bottle are given in Table 5.

Example 21:

The procedures of Example 20 were repeated except that the amounts of the organic peroxide and nucleating agent were changed to 0.005 wt.% and 0.20 wt.%, respectively.

Properties of the resultant bottle are shown in Table 5.

Comparative Example 10:

To powder of a propylene-ethylene random copolymer having an ethylene content of 4 wt.%, were added, besides additives such as antioxidant and the like, 0.005 wt.% of the organic peroxide, Lupasol 101, and 0.30 wt.% of the nucleating agent, NC-4. The resulting resin composition was then molded into a bottle in the same manner as in Example 1.

Properties of the resultant bottle are given in Table 5.

Comparative Example 11:

A cylindrical bottle was molded in the same manner as in Example 15, using a propylene-ethylene random copolymer which had an ethylene content of 4 wt.%, MFI of 2 g/10 min. and log MFI + 5.20 log [$\eta$] = 1.98, and contained 0.30 wt.% of the nucleating agent, NC-4.

Properties of the thus-obtained bottle are shown in Table 5.

Comparative Example 12:

To powder of a propylene-ethylene random copolymer having an ethylene content of 2 wt.%, were added, besides additives such as antioxidant and the like, 0.25 wt.% of the organic peroxide, Parkadox 14, and 0.30 wt.% of the nucleating agent, NC-4. Pellets were then obtained in the same manner as in Example 15. Those pellets were injection stretch-blow molded in the same manner as in Example 15. However, the wall thickness underwent considerable variations upon the blow-molding step and no good container was hence obtained.

Comparative Example 13:

To powder of a propylene-ethylene random copolymer having an ethylene content of 0.5 wt.%, were added, besides additives such as antioxidant and the like, 0.10 wt.% of the organic peroxide, Lupasol 101, and 0.30 wt.% of the nucleating agent, NC-4. Pellets were then obtained in the same manner as in Example 15.

Those pellets were injection stretch-blow molded in the same manner as in Example 15. However, the wall thickness underwent considerable variations during the blow-molding step and no good container was hence obtained.

Comparative Example 14:

0.25 wt.% Of the organic peroxide, Parkadox 14, and 0.30 wt.% of the nucleating agent, NC-4, were added along with additives such as an antioxidant and the like to powder of a polypropylene homopolymer. Similar to Example 15, pellets were obtained.

Those pellets were injection stretch-blow molded in the same manner as in Example 15. However, the wall thickness underwent significant variations during the blow-molding step and no good container was hence obtained.

## Table 5

| | Properties of propylene | | | | | Properties of blow-molded container | | | |
|---|---|---|---|---|---|---|---|---|---|
| | Ethylene content (%) | MFI (g/10 min.) | $[\eta]$ (dl/g) | log MFI + 5.20 log$[\eta]$ | Amount of added nucleating agent (wt.%) | Side wall thickness (mm) | Haze B of side wall (%) | Thickness uniformity | Haze H converted to 1 mm wall thickness (%) |
| Example 15 | 4 | 14 | 1.35 | 1.82 | 0.30 | 0.53 | 2.8 | good | 4.3 |
| Example 16 | 4 | 14 | 1.34 | 1.81 | 0.10 | 0.54 | 3.3 | good | 5.1 |
| Example 17 | 4 | 25 | 1.22 | 1.85 | 0.30 | 0.46 | 2.1 | good | 3.6 |
| Example 18 | 5.5 | 8 | 1.51 | 1.83 | 0.20 | 0.53 | 4.0 | good | 6.7 |
| Example 19 | 5.5 | 41 | 1.09 | 1.81 | 0.20 | 0.50 | 1.9 | good | 3.1 |
| Example 20 | 1.5 | 22 | 1.23 | 1.81 | 0.30 | 0.49 | 3.6 | good | 6.2 |
| Example 21 | 1.5 | 6 | 1.58 | 1.81 | 0.20* | 0.50 | 4.5 | good | 7.5 |
| Comp. Ex. 10 | 4 | 2 | 1.97 | 1.83 | 0.30 | 0.50 | 9.4 | good | 17.4 |
| Comp. Ex. 11 | 4 | 2 | 2.10 | 1.98 | 0.30 | 0.50 | 18 | good | 18.9 |
| Comp. Ex. 12 | 2 | 55 | 1.03 | 1.81 | 0.30 | poor moldability | | very poor | - |
| Comp. Ex. 13 | 0.5 | 15 | 1.33 | 1.82 | 0.30 | poor moldability | | very poor | - |
| Comp. Ex. 14 | 0 | 15 | 1.45 | 2.02 | 0.30 | poor moldability | | very poor | - |

* Dibenzylidenesorbitol was used. "NC-4" was used in the remaining Examples.

Example 22:

As a polypropylene-base resin, there was employed an ethylene-propylene random copolymer having an ethylene content of 4 wt.% and melt flow index (MFI) of 15 g/10 min. and containing 0.2 wt.% of the nucleating agent, NC-4.

The crystallization temperature Tc of the above resin was 118°C.

Using the injection stretch-blow molding machine ASB-50, the above resin was molded under the following conditions while maintaining its preblowing and stretch temperature adjusting mold at 110°C. A cylindrical bottle having a diameter of 70 mm and an internal volume of 500 ml was resulted.

| | |
|---|---|
| Injection molding temperature: | 220°C |
| Temperature of injection mold: | 15°C |
| Stretch ratio in preblowing: | 1 times (axial)<br>1.4 times (lateral) |
| Preblowing air pressure: | 5 $kg/cm^2$ |
| Stretch ratio in blow orientation: | 1.8 times (axial)<br>1.2 times (lateral) |
| Stretch blowing air pressure: | 9 $kg/cm^2$ |

The thus-obtained bottle was 20 g in weight and had a side wall thickness of about 0.53 mm. It was a bottle excellent in transparency and free of unveven thickness.

A specimen was cut out from the side wall of the above-obtained bottle. Its percentage haze and breaking strength were respectively measured to be 3.1% and 740 kg/cm$^2$ (when drawn in the axial direction) and 710 kg/cm$^2$ (when drawn in the lateral direction).

Measurement results are summarized in Table 6.

Examples 23 and 24 & Comparative Examples 15 and 16:

Cylindrical bottles were molded in the same manner as in Example 22 except that polypropylene-base resins having ethylene contents, MFIs and nucleating agent (NC-4) contents shown in Table 6 were respectively employed as polypropylene-base resins and the temperature of the preblowing and stretch temperature adjusting mold was altered respectively to the temperatures given also in Table 6.

The Tc values of the resultant resin compositions and measurement results on the properties of the thus-obtained bottles are both tabulated in Table 6.

By the way, the bottle obtained in Comparative Example 15 was so strongly hazed that its white tint was visually appreciable. In Comparative Example 16, the wall thickness underwent considerable variations and no good bottle was hence obtained.

Table 6

| | | Ex. 22 | Ex. 23 | Ex. 24 | Comp. Ex. 15 | Comp. Ex. 16 |
|---|---|---|---|---|---|---|
| Resin | Ethylene content (w.t%) | 4 | 3.5 | 4 | 4 | 4 |
| | MFI (g/10 min.) | 15 | 8 | 25 | 15 | 15 |
| | Nucleating agent (wt.%) | 0.2 | 0.3 | 0.2 | 0.2 | 0.2 |
| | Tc* (°C) | 118 | 115 | 121 | 118 | 118 |
| Temperature of preblowing mold (°C) | | 110 | 107 | 115 | 140 | 80 |
| Bottle | Side wall thickness (mm) | 0.53 | 0.51 | 0.51 | 0.53 | - |
| | Thickness uniformity | good | good | good | good | poor |
| | Percentage haze** (%) | 3.1 | 4.3 | 2.8 | 11.8 | - |
| | Tensile strength at break*** | | | | | |
| | (axial) | 740 | 780 | 745 | 600 | - |
| | (lateral) | 710 | 755 | 730 | 560 | - |

* Using a differential scanning calorimeter Model DSC-IB manufactured by Parkin-Elmer Inc., U.S.A., each resin was once dissolved and its Tc was measured at a cooling rate of 10°C/min.

** Measured in accordance with the method defined in JIS K-6714 (ASTM D1003-61), using a hazemeter manufactured by Nihon Denshoku Kabushiki Kaisha.

*** Measured at a straining rate of 30 mm/min. by means of a tension tensile testing machine manufactured by Shimadzu Corp.

Example 25:

A propylene-ethylene random copolymer having an MFI of 15 g/10 min. and an ethylene content of 4 wt.% was injection stretch-blow molded in the same manner as in Example 1, thereby to obtain a cylindrical bottle having a diameter of 70 mm and an internal volume of 500 cc.

The weight of the thus-obtained bottle was 24 g. It was a bottle featuring good uniformity in wall thickness and superb transparency. It gave good see-through especially when the bottle is filled with a liquid. It was thus suitable as a therapeutic container such as transfusion bottle. The thickness of its side wall was 0.50 mm. The percentage haze of a cut-out specimen was measured in accordance with the method described in Japanese Industrial Standard K-6714, using a haze meter manufactured by Nihon Denshoku Kabushiki Kaisha. It was found to be 7.8%.

Example 26:

A cylindrical bottle having a diameter of 70 mm and an internal volume of 500 cc was molded by repeating the procedures of Example 25 except that a propylene-ethylene random copolymer having an MFI of 6 g/10 min. and ethylene content of 2 wt.% was used as a propylene-ethylene copolymer. The weight of the thus-obtained bottle was 24 g. It was a bottle

featuring good uniformity in wall thickness and superb transparency. It gave good see-through especially when a liquid was poured there. It was thus suitable as a therapeutic container such as transfusion bottle. The thickness of its side wall was 0.50 mm, whereas its percentage haze was 9.2%. When liquid paraffin was coated on its inner wall, the percentage haze was 7.6%.

Comparative Example 17:

A cylindrical bottle having an internal volume of 500 cc was obtained by conducting the injection stretch-blow molding process in the same manner as in Example 25 for the employment as the propylene-ethylene random copolymer of a propylene-ethylene random copolymer the MFI and ethylene content of which were 2 g/10 min. and 2 wt.%, respectively.

The transparency of the thus-obtained bottle was insufficient. Its side wall thickness was 0.49 mm and its percentage haze was 19.8%. When liquid paraffin was coated on its inner wall, the percentage haze was 19.0%.

Comparative Example 18:

The injection stretch-blow molding process was practiced in the same manner as in Example 25 except for the employment as the propylene-ethylene random copolymer of a propylene-ethylene random copolymer the MFI and ethylene content of which were 25 g/10 min. and

2.0 wt.%, respectively. The thus-obtained bottle was observed to have a wall thickness varied in both axial and lateral directions, whereby making it impossible to use the bottle as a safe and dependable transfusion bottle.

What is claimed is:

1. A container obtained by injection stretch-blow molding a polypropylene-base resin, the side wall of the container having a percentage haze of 9% or smaller when converted to the wall thickness of 1 mm.

2. A container as claimed in Claim 1, wherein the polypropylene-base resin is a random copolymer of propylene and an alpha-olefin.

3. A container as claimed in Claim 1, wherein the polypropylene-base resin is a copolymer of propylene and ethylene, and the ethylene content is 1 - 6 wt.% of the copolymer.

4. A resin composition for injection stretch-blow molding, comprising a random copolymer of propylene and an alpha olefin, the random copolymer having a melt flow index of 4 - 50 g/10 min.

5. A resin composition as claimed in Claim 4, wherein the random copolymer consists essentially of the propylene and ethylene, and the ethylene content is 1 - 6 wt.% of the random copolymer.

6. A resin composition as claimed in Claim 4, further comprising a nucleating agent in an amount of

1 wt.% or less based on the random copolymer.

7. A resin composition as claimed in Claim 5, further comprising a nucleating agent in an amount of 1 wt.% or less based on the random copolymer.

8. A resin composition as claimed in Claim 6, wherein the nucleating agent is dibenzylidenesorbitol or a derivative thereof, the amount of which is 0.01 - 1.0 wt.% based on the random copolymer.

9. A resin composition as claimed in Claim 7, wherein the nucleating agent is dibenzylidenesorbitol or a derivative thereof, the amount of which is 0.01 - 1.0 wt.% based on the random copolymer.

10. A resin composition as claimed in Claim 4, wherein the random copolymer has an intrinsic viscosity $[\eta]$ (dl/g), when measured at 135°C in a tetralin solution, and a melt flow index MFI (g/10 min.), which intrinsic viscosity and melt flow index have a relation represented by the following equation:

$$1.70 \leq \log MFI + 5.20 \log [\eta] \leq 1.95$$

11. A resin composition as claimed in Claim 5, wherein the random copolymer has an intrinsic viscosity $[\eta]$ (dl/g), when measured at 135°C in a tetralin solution, and a melt flow index MFI (g/10 min.), which

intrinsic viscosity and melt flow index have a relation represented by the following equation:

$$1.70 \leq \log MFI + 5.20 \log [\eta] \leq 1.95$$

12. A resin composition as claimed in Claim 8, wherein the random copolymer has an intrinsic viscosity [$\eta$] (dl/g), when measured at 135°C in a tetralin solution, and a melt flow index MFI (g/10 min.), which intrinsic viscosity and melt flow index have a relation represented by the following equation:

$$1.70 \leq \log MFI + 5.20 \log [\eta] \leq 1.95$$

13. A resin composition as claimed in Claim 9, wherein the random copolymer has an intrinsic viscosity [$\eta$] (dl/g), when measured at 135°C in a tetralin solution, and a melt flow index MFI (g/10 min.), which intrinsic viscosity and melt flow index have a relation represented by the following equation:

$$1.70 \leq \log MFI + 5.20 \log [\eta] \leq 1.95$$

14. In a process for producing the injection stretch-blow molded container as claimed in Claim 1, the improvement wherein an injection-molded parison with a bottom is preblown in a preblowing and stretch temperature adjusting mold, which has been adjusted to a temperature in the range of from (Tc - 30°C) to (Tc + 20°C), Tc being the crystallization temperature (°C) of the polypropylene-base resin, so as to adjust

the stretch temperature of the injection-molded parison; and the resulting preform is then stretch-blow molded.

15. A process as claimed in Claim 14, wherein the polypropylene-base resin is a random copolymer of propylene and an alpha-olefin.

16. A process as claimed in Claim 14, wherein the polypropylene-base resin is a copolymer of propylene and ethylene, and the ethylene content is 1 - 6 wt.% of the copolymer.

17. A therapeutic container injection stretch-blow molded from a random copolymer of propylene and ethylene, which random copolymer has a melt flow index of 4 - 20 g/10 min.

18. A therapeutic container as claimed in Claim 17, wherein the random copolymer contains 0.5 - 8 wt.% of ethylene.

19. A therapeutic container as claimed in Claim 18, wherein the ethylene content is 1 - 6 wt.%.

20. A therapeutic container as claimed in Claim 19, wherein the random copolymer is free of any nucleating agent.